Europäisches Patentamt

European Patent Office

Office européen des brevets

(19)

(11) Numéro de publication : **0 376 771 B1**

(12) ## FASCICULE DE BREVET EUROPEEN

(45) Date de publication du fascicule du brevet :
**19.02.92 Bulletin 92/08**

(51) Int. Cl.⁵ : **G01P 3/48,** F16C 19/52

(21) Numéro de dépôt : **89403289.5**

(22) Date de dépôt : **28.11.89**

(54) **Roulement à capteur d'informations.**

(30) Priorité : **20.12.88 FR 8816795**

(43) Date de publication de la demande :
**04.07.90 Bulletin 90/27**

(45) Mention de la délivrance du brevet :
**19.02.92 Bulletin 92/08**

(84) Etats contractants désignés :
**DE ES GB IT SE**

(56) Documents cités :
**EP-A- 0 250 275**

(73) Titulaire : **S.N.R. ROULEMENTS**
**Boîte Postale 17 1, rue des Usines**
**F-74010 Annecy Cédex (FR)**

(72) Inventeur : **Hajzler, Christian**
**13, rue de Rumilly**
**F-74000 Annecy (FR)**

(74) Mandataire : **Ernst-Schonberg, Michel**
**8/10, avenue Emile Zola**
**F-92109 Boulogne Billancourt (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

EP 0 376 771 B1

## Description

L'invention concerne un roulement à capteur d'informations qui possède une bague fixe, une bague tournante, des chemins de roulement de réception de corps roulants au contact desdites bagues, un joint d'étanchéité et dans lequel la bague fixe possède une gorge de montage dudit capteur.

La publication FR-A 2 574 501 décrit un roulement dans lequel le capteur est monté sur un élément d'étanchéité monté dans une gorge de la bague fixe.

Les positions du capteur et de ses connexions sont déterminées au cours du montage du joint et ne peuvent être modifiées ultérieurement. Dans ces conditions, le capteur et les éléments de connexion occupent trop souvent une position angulaire incompatible avec la localisation du circuit de traitement des signaux émis par le capteur.

Conformément à l'invention, ce problème est résolu par le fait que le capteur est supporté dans un tambour dont l'ouverture est tournée vers une armature du joint d'étanchéité, munie d'une extension axiale en direction du capteur, constitutive de la portée cylindrique de montage du joint dans un logement défini entre les deux bagues, tandis que des ouvertures réparties circulairement à la surface de ladite portée, débouchent dans la gorge de montage du capteur et sont traversés radialement par des organes de retenue axiale du tambour dans ladite gorge.

Le roulement ainsi réalisé autorise un montage et un démontage axial du capteur sans nécessiter un démontage préalable du joint et un positionnement correct de celui-ci en fonction de l'environnement du roulement.

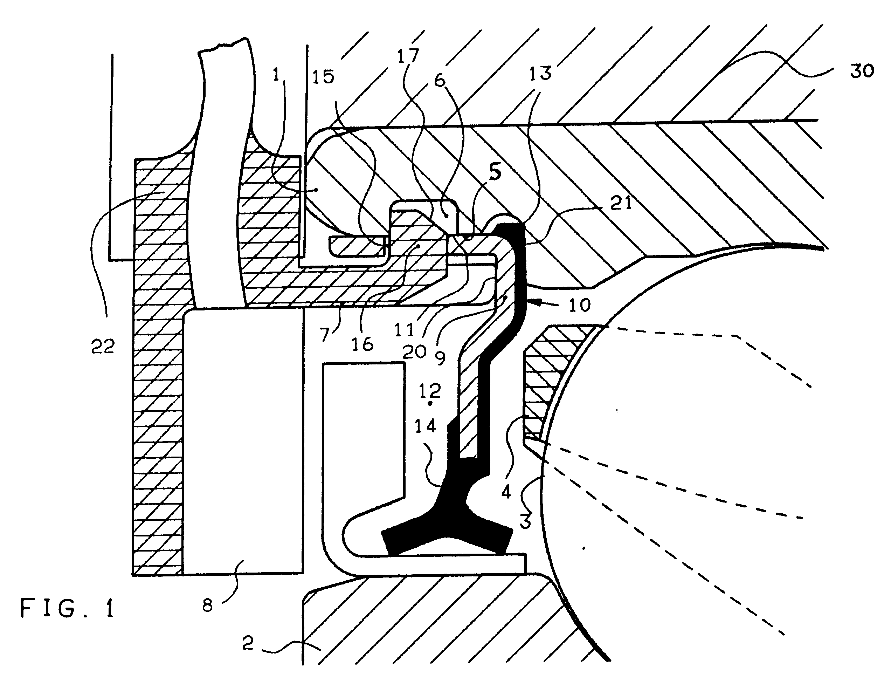

D'autres caractéristiques et avantages de l'invention apparaîtront à la lecture d'un exemple de réalisation du roulement dans lequel la figure 1 est une vue en coupe partielle d'un roulement à billes décrit à titre d'exemple nullement limitatif.

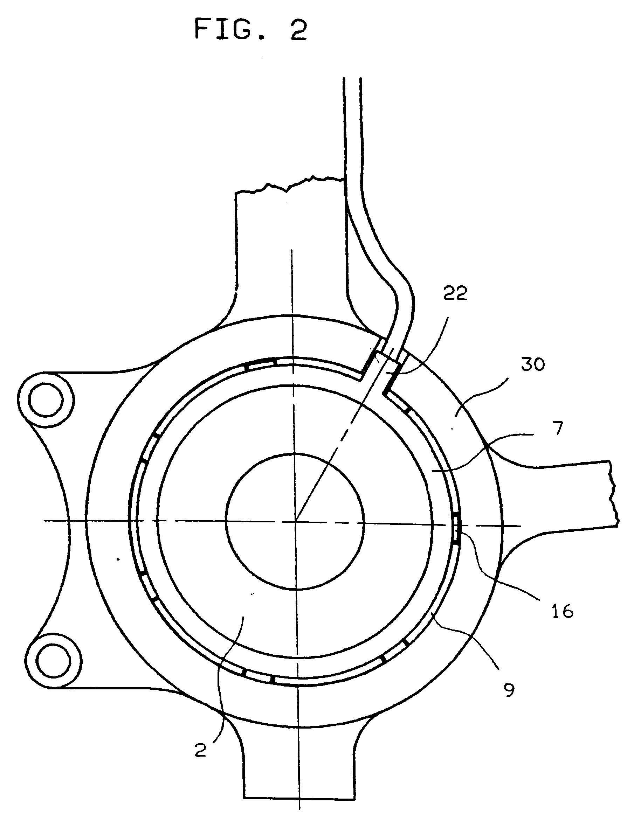

La figure 2 est une vue de face du roulement représenté à la figure 1.

Sur le dessin, le roulement représenté à la figure 1 possède une bague extérieure 1 et une bague intérieure 2 susceptibles d'être, au choix, fixe ou tournante en fonction du montage utilisé.

Les bagues 1 et 2 possèdent des chemins de roulement pour des corps roulants 3 disposés dans une cage 4 qui en assure la retenue et le positionnement angulaire.

La bague extérieure 1 supposée fixe dans le mode d'application de l'invention possède une portée 5 et une gorge 6 de montage d'un tambour 7 dont la paroi faciale porte le capteur 8.

Le tambour 7 présente son ouverture axiale tournée vers l'armature 9 du joint d'étanchéité 10. Ainsi que cela est montré à la figure, l'armature 9 s'étend axialement en direction du capteur 8 et constitue la portée cylindrique 11 de montage du joint dans le logement 12 défini entre les bagues 1, 2.

La surface interne de la bague 1 qui reçoit la portée 11 du joint porte au moins la gorge 6 et subsidiairement une gorge 13 de réception et d'immobilisation de la garniture d'étanchéité 14 surmoulée sur l'armature 9.

La portée 11 de l'armature 9 possède un certain nombre d'ouvertures 15 réparties circulairement à la surface de la portée qui débouchent dans la gorge 6.

L'immobilisation et l'ajustement angulaire du capteur 8 s'effectuent au niveau du tambour 7 qui possède, à cet effet, des doigts de retenue 16 qui s'étendent radialement au travers d'un ou de plusieurs perçages 15 dans la gorge 6.

Selon un mode de réalisation du tambour 7, les doigts 16 sont formés à partir de languettes longitudinalement découpées dans la paroi du tambour et possédant une extrémité recourbée radialement vers l'extérieur. Chacun des doigts 6 possède un chanfrein 17 dont la mise en butée sur l'extension de l'armature 9 du joint à l'extrémité de la portée 11 permet la transformation de l'effort axial de poussée lors du montage du capteur, en un effort de flexion radial des doigts 16.

Ainsi que cela ressort de la figure, la face d'extrémité 20 du tambour 7, qui est tournée vers l'intérieur du roulement, exerce un effort axial de précontrainte soit sur l'armature 9 du joint d'étanchéité 10, soit sur la garniture 14 de celui-ci. Cette précontrainte a pour effet de plaquer l'armature 9 et/ou la garniture 14 contre un épaulement 21 de la bague 1 qui limite axialement le logement 12. L'élasticité de la matière constitutive du joint 10 exerce, par ailleurs, un effort antagoniste sur la face 20 du tambour et permet la réalisation de l'appui des doigts 16 contre le flanc de la gorge 6.

Le tambour 7 possède, par ailleurs, un ergot extérieur 22 disposé radialement, qui enrobe le fil d'alimentation du capteur 8 et de transmissions d'informations données par ledit capteur. L'ergot 22 facilite également le positionnement angulaire du tambour 7. A cet effet, le flanc latéral du carter 30 support de la bague 1 possède une mortaise radiale de réception de l'ergot 22. Par voie de conséquence, le joint d'étanchéité 10 est simultanément immobilisé en rotation.

## Revendications

1. Roulement à capteur d'informations qui possède une bague fixe (1), une bague tournante (2), des chemins de roulement de réception de corps roulants (3) au contact desdites bagues, un joint d'étanchéité (10) et dans lequel la bague fixe possède une gorge (6) de montage dudit capteur (8), caractérisé par le fait que le capteur (8) est supporté dans un tambour (7) dont l'ouverture est tournée vers une armature (9) du joint d'étanchéité (10), cette dernière présentant une extension axiale en direction du capteur, constitutive de la portée cylindrique (11) de montage du joint dans un logement (12) défini entre les deux bagues (1, 2) tandis que des ouvertures (15) réparties circulairement à la surface de ladite portée, débouchent dans la gorge (6) de montage du capteur (8) et sont traversés radialement par des organes (16) de retenue axiale du tambour (7) dans ladite gorge (6).

2. Roulement selon la revendication 1, caractérisé par le fait que les organes de rétention axiale du tambour porte-capteur sont constitués par des doigts (16) d'accrochage élastiques répartis à la périphérie du tambour.

3. Roulement selon la revendication 2, caractérisé par le fait que la face (20) d'extrémité du tambour (7) qui est tournée vers l'intérieur du roulement est en appui de butée sur la garniture (14) du joint (10) ou sur l'armature (9) de celui-ci.

4. Roulement selon la revendication 1, caractérisé par le fait qu'un ergot extérieur (22) disposé radialement à la surface du tambour (7) est logé dans une mortaise du support (30) de la bague (1) fixe du roulement, dans le but d'immobiliser simultanément en rotation le tambour (7) et le joint d'étanchéité (10).

## Claims

1. An information sensor bearing comprising a fixed ring (1), a rotary ring (2), raceways for receiving rolling bodies (3) in contact with these rings, a sealing gasket (10) and in which the fixed ring has a groove (6) for the mounting of the sensor (8), characterized in that the sensor (8) is supported in a drum (7) whose opening faces an armature (9) of the sealing gasket (10), the latter comprising an axial extension in the direction of the sensor, forming the cylindrical seat (11) for the mounting of the gasket in a housing (12) bounded between the two rings (1, 2), while openings (15) distributed circularly on the surface of this seat communicate with the groove (6) for the mounting of the sensor (8) and are radially traversed by members (16) for the axial retention of the drum (7) in this groove (6).

2. A bearing as claimed in claim 1, characterized in that the axial retaining members of the drum bearing the sensor are formed by elastic hooking fingers (16) distributed on the periphery of the drum.

3. A bearing as claimed in claim 2, characterized in that the end surface (20) of the drum (7) which faces the interior of the bearing is in abutment against the seal (14) of the gasket (10) or the armature (9) thereof.

4. A bearing as claimed in claim 1, characterized in that an outer lug (22) disposed radially with respect to the surface of the drum (7) is housed in a slot of the support (30) for the fixed ring (1) of the bearing so as simultaneously to lock the drum (7) and the sealing gasket (10) against rotation.

## Patentansprüche

1. Lager mit Meßwertaufnehmer, das einen feststehenden Ring (1) aufweist, einen sich drehenden Ring (2), Rollflächen zur Aufnahme von mit ihnen in Berührung stehenden Rollkörpern (3) und eine Dichtung (10), wobei der feststehende Ring eine Montagenut (6) für den Aufnehmer (8) aufweist, dadurch gekennzeichnet, daß der Aufnehmer (8) in einer Trommel (7) sitzt, deren Öffnung zu einer Auflage (9) für die Dichtung (10) gerichtet ist, wobei diese einen axialen zum Aufnehmer hin gerichteten Ausschnitt aufweist und eine zylindrische Anschlagfläche (11) der Dichtungsaufnahme bildet in einer Aussparung (12) zwischen den beiden Ringen (1, 2), während Öffnungen (15), die kreisförmig auf der Oberfläche der Halterung verteilt sind, in die Montagenut (6) für die Aufnehmer (8) münden und radial in Querrichtung von axialen Halteteilen (16) der Trommel (7) in der Nut (6) durchsetzt werden.

2. Lager nach Anspruch 1, dadurch gekennzeichnet, daß die axialen Halteteile der den Aufnehmer tragenden Trommel aus elastischen Verankerungen (16) bestehen, die entlang des Trommelumfangs verteilt sind.

3. Lager nach Anspruch 2, dadurch gekennzeichnet, daß die Außenfläche (20) der Trommel (7), die zum Inneren des Lagers hin gerichtet ist, sich auf einer Anschlagfläche (14) der Dichtung (10) oder auf deren Auflage (9) abstützt.

4. Lager nach Anspruch 1, dadurch gekennzeichnet, daß sich ein von der Oberfläche der Trommel (7) nach außen erstreckender Nocken (22) in eine Aussparung (30) des feststehenden Lagerrings (1) eingreift, um sowohl eine Verdrehung der Trommel (7) als auch der Dichtung (10) zu verhindern.

FIG. 1

EP 0 376 771 B1

# FIG. 2